# EUROPEAN PATENT SPECIFICATION

(11) **EP 2 266 838 B1**
(45) Date of publication and mention of the grant of the patent: **09.03.2016**
(21) Application number: 10166954.7
(22) Date of filing: 23.06.2010
(51) Int. Cl.: B60Q 1/14, F21V 14/08, F21S 8/10

(54) **Vehicle headlamp apparatus**
Fahrzeugscheinwerfervorrichtung
Dispositif de phare de véhicule

(30) Priority: 26.06.2009 JP 2009152544
(43) Date of publication of application: 29.12.2010
(73) Proprietor: Koito Manufacturing Co., Ltd., Tokyo 108-8711 (JP)
(72) Inventor: Tatara, Naoki, Shizuoka-shi Shizuoka (JP); Mochizuki, Kiyotaka, Shizuoka-shi Shizuoka (JP); Hayakawa, Michihiko, Shizuoka-shi Shizuoka (JP); Yamazaki, Atsushi, Shizuoka-shi Shizuoka (JP); Konishi, Akira, Shizuoka-shi Shizuoka (JP)
(74) Representative: Grünecker Patent- und Rechtsanwälte PartG mbB

(56) References cited:
- EP-A1- 1 757 485
- EP-A1- 2 068 071
- EP-A2- 2 100 769
- WO-A1-2009/039882
- DE-A1- 19 631 151
- DE-A1-102008 060 949
- US-A- 5 781 105
- US-A1- 2003 156 016
- US-A1- 2007 002 571
- US-A1- 2008 129 206

## Description

The present invention relates to a vehicle headlamp apparatus and, in particular, to a vehicle headlamp apparatus adapted to be used in automobiles.

A vehicle headlamp apparatus is generally operable to perform switching between a low beam and a high beam. The low beam irradiates a near region at a certain illuminance so as not to produce a glare to vehicles in front, including oncoming vehicles and preceding vehicles, and is mainly used when driving in an urban area. On the other hand, the high beam illuminates a wide range ahead including a distant region at a relatively high illuminance, and is mainly used when driving at high speed on a road where no or few vehicles are present in front.

While the high beam is superior to a low beam in terms of driver visibility, there is a problem that it may produce a glare to drivers of other vehicles. Accordingly, the low beam is often used when driving in an urban area at nighttime. When the low beam is used, a light source for the high beam is not used. Nevertheless, there is a demand for improvement of driver visibility during low beam driving.

DE 102007045150 A1 discloses a technique according to which each headlamp has two light blocking plates that are movable with respect to a light beam. The light blocking plates of one of the headlamp are arranged to form, in combination, a light distribution pattern which irradiates only one side in a region in front of a vehicle with a high beam, and the light blocking plates of the other headlamp are arranged to form, in combination, a light distribution pattern which irradiates only the other side in the region in front of the vehicle with a high beam. The headlamps are swiveled such that a light blocked region is created so as to correspond to a region where a vehicle is present in front.

According to the technique disclosed in DE 102007045150 A1, a vehicle ahead is recognized by detecting light emitted from the vehicle ahead with an in-vehicle camera. However, with this detection method, it is difficult to recognize pedestrians walking, for example, on road shoulders while a glare to the pedestrians should also be prevented. Thus, DE 102007045150 A1 teaches to use a laser sensor or a radar sensor in order to detect the pedestrians. However, the sensor additionally provided for detecting the pedestrians increases the number of component as well as cost.

US 5,781,105 A describes a vehicle headlamp apparatus according to the preamble of claim 1.

WO 2009/039882 A1 describes a projection headlight arrangement capable of producing an auxiliary light distribution pattern combined from right and left partial light distribution patterns, so a central light blocked region is provided which can be controlled such that a vehicle ahead is included in this light block region. Both left and right lamps can be tilted downwards so that the cut-off line of partial light distributions produced with each of these lamp units is moved continuously to a low beam region.

The present invention has been made in view of above, and it is an object of the present invention to provide a technique that prevents a glare to pedestrians with a simple configuration and improves driver visibility.

According to the present invention, a vehicle headlamp apparatus (210) includes the features of claim 1.

Other aspects and advantages of the present invention will be apparent from the following description, the drawings and the claims.

Hereinafter, exemplary embodiments of the present invention will be described in detail with reference to the drawings including:
- Fig. 1:: a schematic vertical cross-sectional view illustrating an internal structure of a vehicle headlamp apparatus according to a first exemplary embodiment of the present invention;
- Fig. 2:: a schematic perspective view of a rotary shade;
- Fig. 3:: a functional block diagram illustrating an operational interaction between an irradiation controller of each headlamp and a vehicle controller of a vehicle;
- Figs. 4A to 4F:: explanatory diagrams illustrating light distribution patterns;
- Figs. 5A to 5C:: explanatory diagrams illustrating a split light distribution pattern;
- Fig. 6:: a diagram illustrating a relationship between forward vehicle conditions and light distribution patterns;
- Fig. 7:: a diagram illustrating a relationship between the forward vehicle conditions, a vehicle speed, and the light distribution patterns;
- Fig. 8:: a flowchart of an automatic light distribution control based on the forward vehicle condition o and the vehicle speed; and
- Figs. 9A: and 9B: explanatory diagrams illustrating a light distribution pattern according to a modified example.

In the drawings, the same or equivalent elements are denoted by the same reference signs, and repetitive description will be omitted where appropriate. Further, the following exemplary embodiments are illustrative examples, and do not limit the scope of the invention. The features or combinations of the features of the following exemplary embodiments are not necessarily all essential to the present invention.

### First Exemplary Embodiment

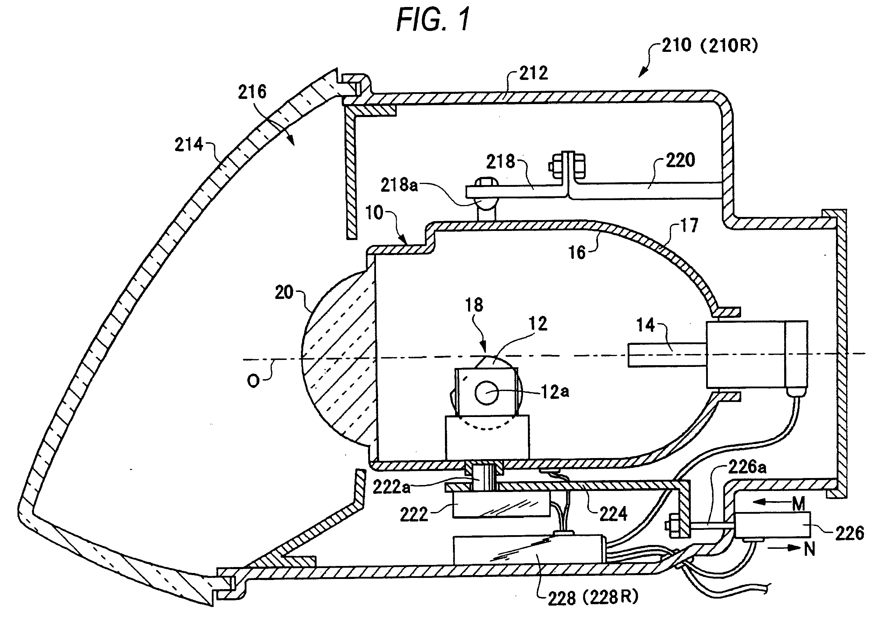

Fig. 1 is a schematic vertical cross-sectional view illustrating an internal structure of a vehicle headlamp apparatus 210 according to a first exemplary embodiment. The vehicle headlamp apparatus 210 includes right and left headlamps 210R, 210L, which are disposed on right and left sides of a vehicle, respectively, and is operable to change its light distribution pattern. The headlamps 210R, 210L have substantially the same structure except that their arrangements are symmetric. Accordingly, the right headlamp 210R will mainly be described below, and the description of the left headlamp will be omitted where appropriate. Further, when describing the left headlamp 210L, the elements of the left headlamp 210L that correspond to those of the right headlamp 201R will be denoted by the same reference signs for the sake of convenience.

The headlamp 210R includes a lamp body 212 having a front opening, and a transparent cover 214 which covers the front opening of the lamp body. The lamp body and the transparent cover 214 form a lamp chamber 216. Inside the lamp chamber 216, a lamp unit 10 is disposed. The lamp unit 10 is configured to produce and send light toward a region in front of the vehicle. A lamp bracket 218 is provided on a portion of the lamp unit 10. The lamp bracket 218 has a pivot mechanism 218a which serves as a right-and-left swiveling center and an up-and-down tilting center of the lamp unit 10. A body bracket 220 is fixed to an inner wall surface of the lamp body 212. The lamp bracket 218 is connected to the body bracket 220 by means of fasteners such as screws. Accordingly, the lamp unit 10 is fixed at a given position inside the lamp chamber 216 such that its orientation can be forwardly or backwardly inclined around the pivot mechanism 218a.

To a bottom portion of the lamp unit 10, a rotating shaft 222a of a swivel actuator 222 is attached. The swivel actuator 222 forms a part of an adaptive front-lighting system (AFS) which, for example, illuminates a region in a traveling direction during cornering operation. For example, the swivel actuator 222 swivels the lamp unit 10 around the pivot mechanism 218a in a traveling direction, based on steering angle data provided from the vehicle, road configuration data provided from a navigation system, a relative positional relationship with vehicles ahead including oncoming vehicles and preceding vehicles, etc. As a result, a region irradiated by the lamp unit 10 is changed from a straight ahead region to a region toward which a road is curved, so that driver visibility is improved. The swivel actuator 222 may be a stepping motor. Alternatively, in a case in which a swiveling angle is a fixed, a solenoid or the like may be used as the swivel actuator 222.

The swivel actuator 222 is fixed to a unit bracket 224, to which a leveling actuator 226 is connected. The leveling actuator 226 is disposed outside the lamp body 212. For example, the leveling actuator 226 includes a motor which moves a rod 226a in directions M, N. When the rod 226a is pushed in the direction M, the lamp unit 10 is tilted about the pivot mechanism 218a so as to be in the backwardly inclined orientation. In contrast, when the rod 226a is pulled in the direction N, the lamp unit 10 is tilted about the pivot mechanism 218a so as to be in the forwardly inclined orientation. Tilting of the lamp unit 10 in the backwardly inclined orientation enables a leveling adjustment to upwardly direct an optical axis. On the other hand, tilting the lamp unit 10 in the forwardly inclined orientation enables a leveling adjustment to downwardly direct the optical axis. According to such leveling adjustments, the optical axis can be adjusted in accordance with an orientation of the vehicle. As a result, it is possible to adjust a range of forward irradiation light from the vehicle headlamp apparatus 210 to an optimum distance.

The leveling adjustment may be carried out in accordance with the orientation of the vehicle while driving. For example, during acceleration, the vehicle is in a backwardly inclined orientation. In contrast, during deceleration, the vehicle is in a forwardly inclined orientation. In accordance with such changes of the orientation of the vehicle, the irradiation direction of the vehicle headlamp apparatus 210 also changes upward or downward, whereby forward irradiation distance increases or decreases. In view of this, the leveling adjustment of the lamp unit 10 may be carried out in real time based on the orientation of the vehicle, so that the range of the forward irradiation can optimally be adjusted even during the driving of the vehicle. This is called as "Auto-Leveling".

Below the lamp unit 10, an irradiation controller 228 is disposed on the inner wall surface of the lamp body 212. The irradiation controller 228 controls turning on and off of the lamp unit 10 as well as a formation of a light distribution pattern. Fig. 1 shows the irradiation controller 228R which controls the headlamp 210R. The irradiation controller 228R also controls the swivel actuator 222, the leveling actuator 226.

The lamp unit 10 may include an aiming adjustment mechanism. For example, an aiming pivot mechanism (not shown) may be provided at a connection portion between the unit bracket 224 and the rod 226a of the leveling actuator 226 to function as a rotation center during aiming adjustment. Further, a pair of aiming adjustment screws (not shown) may be provided at a connection portion between the body bracket 220 and the lamp bracket 218, such that the aiming adjustment screws are spaced away from each other in a vehicle width direction, and such that each of the aiming adjustment screws is moves in a front-rear direction of a vehicle by screwing. According to this aiming adjustment mechanism, when the two aiming adjustment screws are moved forward, the lamp unit 10 tilted around the aiming pivot mechanism so as to be in a forwardly inclined orientation, so that the optical axis is downwardly adjusted. When the two aiming adjustment screws are moved back, the lamp unit 10 is tilted around the aiming pivot mechanism so as to be in a backwardly inclined orientation, so that the optical axis is upwardly adjusted. When the aiming adjustment screw on the left is moved forward, the lamp unit 10 is rotated about the aiming pivot mechanism, so that the optical axis is adjusted toward the right. When the aiming adjustment screw on the right is moved forward, the lamp unit 10 is rotated about the aiming pivot mechanism, so that the optical axis is adjusted toward the left. This aiming adjustment is carried out before shipping of the vehicle, during vehicle inspection, and when replacing the vehicle headlamp apparatus 210. By way of the aiming adjustment, the lamp unit 10 is adjusted to be in a prescribed orientation as designed, and the control of the formation of the light distribution pattern is carried out on the basis of this prescribed orientation.

The lamp unit 10 includes a shade mechanism 18 having a rotary shade 12, a light source 14, a lamp housing 17 having a reflector 16 on an inner surface thereof, and a projection lens 20. The light source 14 may be an incandescent bulb, a halogen lamp, a discharge bulb, an LED, or the like. In this exemplary embodiment, the light source 14 is a halogen lamp. The reflector 16 reflects light emitted from the light source 14. Further, a part of the light from the light source 14 and the reflector 16 is guided to the projection lens 20 over the rotary shade 12.

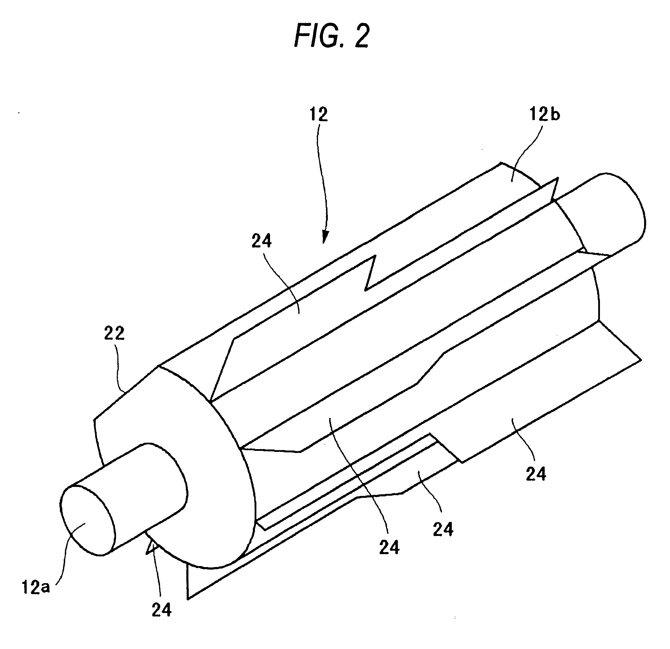

Fig. 2 is a schematic perspective view of the rotary shade 12. The rotary shade 12 is a cylindrical member and is rotatable about a rotating shaft 12a. The rotary shade 12 has a cutoff portion 22 that is formed by cutting a part of the rotary shade in an axial direction. The rotary shade 12 holds a plurality of shade plates 24 on an outer peripheral surface 12b other than the cutoff portion 22. Depending on its rotation angle, the rotary shade 12 can move one of the shade plates 24 or the cutoff portion 22 to the position of the rear focal point of the projection lens 20 on the optical axis O. When one of the shade plates 24 is positioned on the optical axis O, a light distribution pattern that corresponds to an edge line of the shade plate 24 is formed. More specifically, when the shade plate 24 positioned on the optical axis O blocks a part of the light emitted from the light source 14, a low beam light distribution pattern or a partially high beam light distribution pattern is formed. When the cutoff portion 22 is moved so as to be positioned on the optical axis O, the part of the light emitted from the light source 14 is not blocked, whereby a high beam light distribution pattern is formed.

The rotary shade 12 may be rotated by a motor, in which case a rotation amount of the motor may be controlled to move the cutoff portion 22 or the shade plate 24 to the optical axis O so as to form a desired light distribution pattern. The cutoff portion 22 may not be formed on the outer peripheral surface 12b of the rotary shade 12. In such a case, when forming a high beam light distribution pattern, the rotary shade 12 may be retracted away from the optical axis O by means of, for example, a solenoid or the like. According to this configuration, a low beam light distribution pattern or a light distribution pattern similar to the low beam light distribution pattern can be fixed even when, for example, the motor for rotating the rotary shade 12 fails. That is, a fail-safe function is provided such that the rotary shade 12 is reliably prevented from being fixed in the position for forming the high beam light distribution pattern.

Tuning back to Fig. 1, at least a part of the reflector 16 is formed in an ellipsoidal shape. This ellipsoidal surface of the reflector 16 is designed so that a cross-section including the optical axis O of the lamp unit 10 becomes at least a part of an ellipse. The ellipsoidal surface of the reflector 16 has a first focal point substantially at the center of the light source 14, and a second focal point on the rear focal plane of the projection lens 20.

The projection lens 20 is disposed on the optical axis O extending in the front-rear direction of the vehicle, and the light source 14 is disposed behind the rear focal plane of the projection lens 20. The projection lens 20 is a plano-convex aspheric lens having a convex front surface and a flat rear surface. The projection lens 20 inverts a light source image on the rear focal plane and projects the inverted light source image onto a virtual vertical screen in font of the vehicle headlamp apparatus 210. The structure of the lamp unit 10 is not particularly limited to the structure described above. For example, the lamp unit 10 may be a reflector-type lamp unit that does not have the projection lens 20.

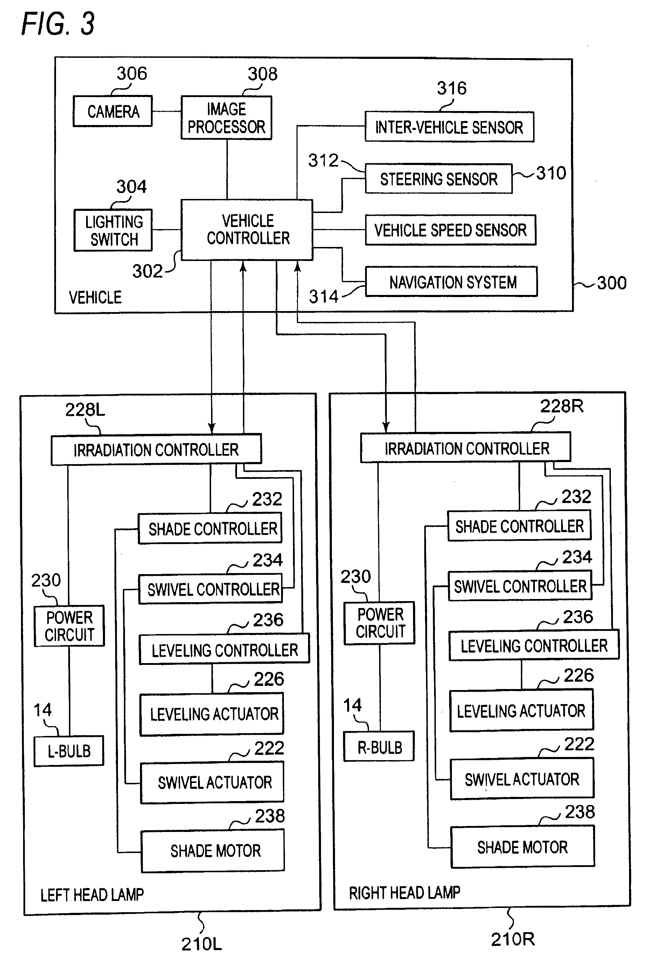

Fig. 3 is a functional block diagram illustrating an operational interaction between the irradiation controller 228 of each of the headlamps 210R, 210L and a vehicle controller 302 of the vehicle 300. Since the structures of the right headlamp 210R and the left headlamp 210L are basically the same as described above, only the right headlamp 210R will be described and the description of the left headlamp 210L will be omitted.

The irradiation controller 228R of the right headlamp 210R controls the power circuit 230 to turn on and off the light source 14, based on the information obtained from the vehicle controller 302 of the vehicle 300. The irradiation controller 228R further controls a shade controller 232, a swivel controller 234, and a leveling controller 236, based on the information obtained from the vehicle controller 302. The shade controller 232 controls the rotation of the motor 238, which is coupled to the rotating shaft 12a of the rotary shade 12 via a gear mechanism, to move the desired shade plate 24 or the cutoff portion 22 to the optical axis O. Sensors such as encoders are provided in the motor 238 and the rotary shade 12 respectively to send rotation information on the rotary shade 12 to the shade controller 232, so that feedback control is carried out for the accurate rotation control.

The swivel controller 234 controls the swivel actuator 222 to adjust the optical axis of the lamp unit 10 in the vehicle width direction. For example, during the cornering operation or when turning to the right or to the left, the optical axis of the lamp unit 10 is directed in a direction in which the vehicle is to turn. The leveling controller 236 controls the leveling actuator 226 to adjust the optical axis of the lamp unit 10 in the up and down directions. For example, in accordance with the forward or backward inclination of the orientation of the vehicle during acceleration or deceleration, the leveling controller 236 adjusts the orientation of the lamp unit 10 to adjust the range of forward irradiation light to an optimum distance. The vehicle controller 302 also provides the same information to the headlamp 210L, and an irradiation controller 228L of the left headlamp 210L carries out the same control as the irradiation controller 228R of the right headlamp 210R.

A light distribution pattern to be formed by the headlamps 210R, 210L may switchable in accordance with the operations of a lighting switch 304 by a driver of the vehicle. In such a case, in accordance with the operation of the lighting switch 304, each of the irradiation controllers 228R, 228L determines a light distribution pattern by controlling the motor 238 through the shade controller 232.

Further, the headlamps 210R, 210L may automatically be controlled irrespective of the operations of the lighting switch 304, such that, by detecting the conditions around the vehicle using various sensors, an optimal light distribution pattern for the conditions of the vehicle 300 and around the vehicle 300 is formed. For example, when it is detected that a preceding vehicle, an oncoming vehicle or a pedestrian is in front of the vehicle 300, the irradiation controllers 228R, 228L determine that glare should be prevented based the information obtained from the vehicle controller 302, and form a low beam light distribution pattern. When it is detected that a preceding vehicle, an oncoming vehicle or a pedestrian is not in front of the vehicle 300, the irradiation controllers 228R, 228L determine that driver visibility should be improved, and form a high beam light distribution pattern which does not involve blocking of the light by the shade plates 24.

In order to detect an object in front of the vehicle 300, such as a preceding vehicle or an oncoming vehicle, a camera 306, such as a stereo camera, is connected to the vehicle controller 302 as means for recognizing an object. Image data obtained by the camera 306 is sent to an image processor 308 for object recognition processing, and the recognition result is sent to the vehicle controller 302. For example, when data indicative of feature points of a vehicle, which is previously stored in the vehicle controller 302, is included in the recognition result data from the image processor 308, the vehicle controller 302 recognizes the existence of the vehicle ahead and sends that information to the irradiation controllers 228R, 228L. Upon receipt of the information on the vehicle from the vehicle controller 302, the irradiation controllers 228R, 228L form an optimal light distribution pattern taking into account that vehicle. The feature points of the vehicle are, for example, light spots of a predetermined luminance or more which appear in a region where headlamps or indication lamps such as tail lamps of a vehicle ahead may exist.

The vehicle controller 302 may also obtain information from a steering sensor 310, a vehicle speed sensor 312, and the like that are generally mounted on the vehicle 300. Accordingly, in accordance with driving condition and/or an orientation of the vehicle 300, the irradiation controllers 228R, 228L may select a light distribution pattern to be formed or may simply adjust the light distribution patterns by changing the direction of the optical axis. For example, if the vehicle controller 302 determines that the vehicle 300 is turning based on the information from the steering sensor 310, each of the irradiation controllers 228R, 228L having received information from the vehicle controller 302 may control the rotation of the rotary shade 12 to select a shade plate 24 that forms a light distribution pattern which enhances visibility in a turning direction. Alternatively, without rotating the rotary shade 12, the swivel actuator 222 may be controlled by the swivel controller 234 so that the optical axis of the lamp unit 10 is directed to the turning direction to improve visibility. This control mode is called as a turning sensitive mode.

When driving at high speed during the nighttime, it is preferable to carry out forward irradiation so as to allow the driver to promptly recognize a preceding vehicle, an oncoming vehicle approaching from a distance, road signs, and message boards. Therefore, if the vehicle controller 302 determines that the vehicle 300 is traveling at high speed based on the information from the vehicle speed sensor 312, each of the irradiation controllers 228R, 228L may control the rotation of the rotary shade 12 to select a shade plate 24 that forms a highway mode low beam light distribution pattern which is partially different in shape from the low beam light distribution pattern. Similar results may be achieved by controlling the leveling actuator 226 by the leveling controller 236 to change the orientation of the lamp unit 10 to be in the backwardly inclined orientation. The automatic leveling control by the leveling actuator 226 during the acceleration or the deceleration described above is a control for maintaining the irradiation distance. This control may be used to control the height of a cutoff line so as to obtain a similar result as the control for selecting a cutoff line by rotating the rotary shade 12. This control mode is called as a speed sensitive mode.

The vehicle controller 302 may also obtain information from an inter-vehicle distance sensor (not shown) that is mounted on the vehicle 300, so that each of the irradiation controllers 228R, 228L may adjust the height of a cutoff line of a light distribution pattern in accordance with a distance to a vehicle ahead (inter-vehicle distance). For example, if the vehicle controller 302 determines that a vehicle ahead is relatively far on the basis of the information from the inter-vehicle distance sensor, each of the irradiation controllers 228R, 228L controls the leveling actuator 226 through the leveling controller 236 to change the orientation of the lamp unit 10 to be in the backwardly inclined orientation, so that the cutoff line of a low beam light distribution pattern is slightly moved upward to improve driver visibility while preventing a glare to the vehicle ahead. The light distribution pattern that is formed by this control is called as a dynamic cutoff line. The inter-vehicle distance sensor may be a conventional sensor.

The adjustment of the optical axis of the lamp unit 10 may be carried out without using the swivel actuator 222 or the leveling actuator 226. For example, the lamp unit 10 may be swiveled, or tilted in a forwardly inclined orientation or a backwardly inclined orientation through real-time aiming control, so as to improve visibility in a desired direction.

In addition, the vehicle controller 302 may also obtain information on a road configuration, location of road signs, and the like from a navigation system 314. By obtaining these kinds of information in advance, each of the irradiation controllers 228R, 228L may control the leveling actuator 226, the swivel actuator 222, the motor 238, and the like to smoothly form a light distribution pattern suitable for the road on which the vehicle 300 is traveling. This control mode is called as a navigation sensitive mode. The automatic light distribution control including the above-mentioned various control modes is carried out when, for example, the automatic formation control is instructed from the lighting switch 304.

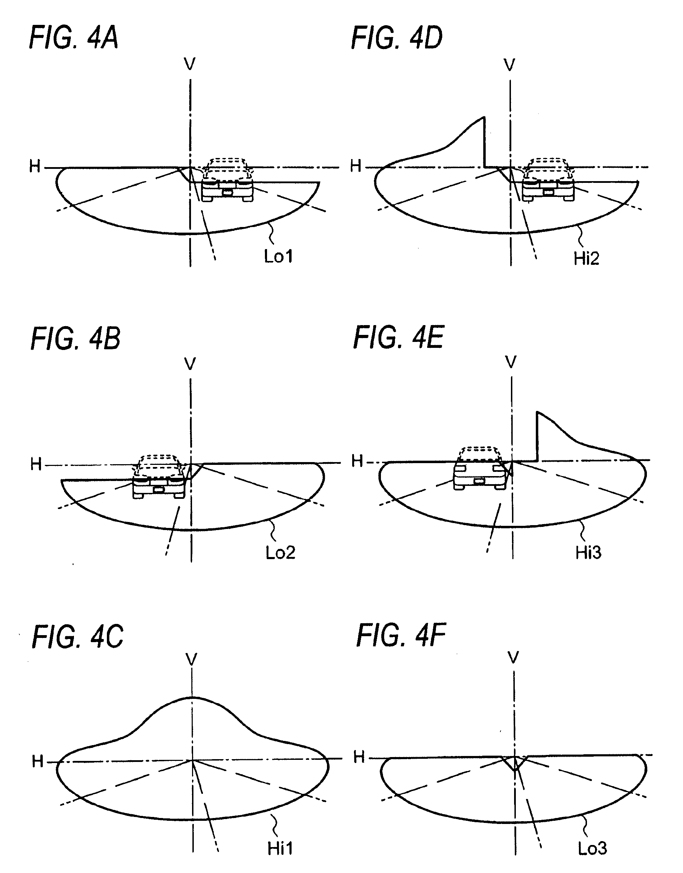

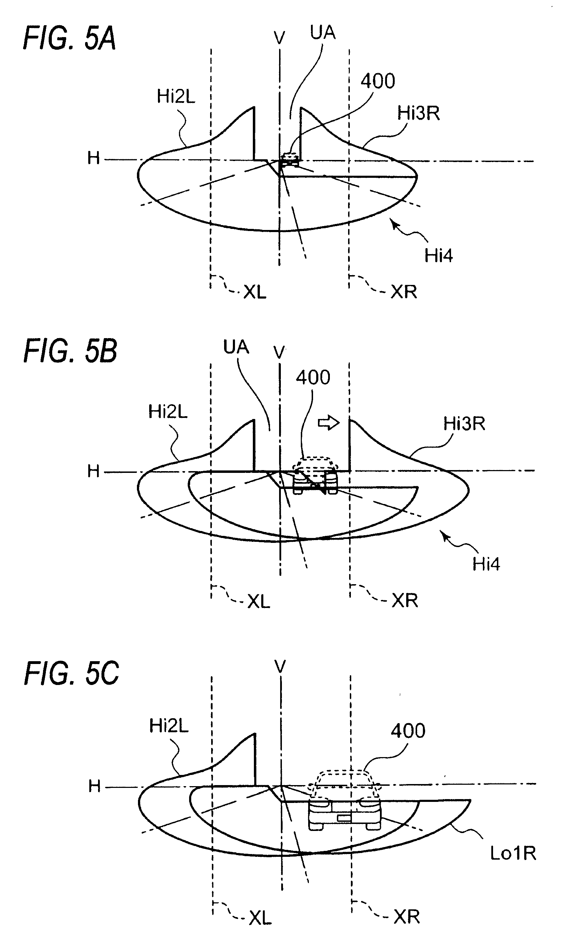

Next, the light distribution patterns that can be formed by each of the headlamps 210R, 210L of the vehicle headlamp apparatus 210 will be described. Figs. 4A to 4F are diagrams illustrating the respective light distribution patterns, and Figs 5A to 5C are diagrams illustrating a split light distribution pattern. Figs. 4A to 4F and 5A to 5C illustrate the light distribution patterns formed on a virtual vertical screen disposed, for example, at a position 25m ahead of the headlamp.

As described above, the headlamps 210R, 210L have substantially the same structure. Accordingly, the headlamps can form the same light distribution patterns. The projection lens 20 is a plano-convex aspheric lens having a convex front surfaceand a flat rear surface as shown in Fig. 1. Therefore, each of the light distribution patterns is an up-down and right-left inverted image of a light source image that includes a portion cut off by the corresponding shade plate 24. Therefore, the shape of a cutoff line of each of light distribution patterns corresponds to the shape of an edge of an associated shade plate 24.

Fig. 4A illustrates a left-hand traffic low beam light distribution pattern Lo1. The left-hand traffic low beam light distribution pattern Lo1 is designed so as not to produce a glare to vehicles and pedestrians ahead in the left-hand traffic system. An upper edge of the left-hand traffic low beam light distribution pattern Lo1 includes an opposite lane cutoff line that extends parallel to a horizontal line H-H line on the right side of a vertical line V-V, a traveling lane cutoff line that extends parallel to the horizontal line H at a level higher than the opposite lane cutoff line on the left side of a line V-V, and an oblique cutoff line that connects the opposite lane cutoff line and the traveling lane cutoff line. The oblique cutoff line obliquely extends upward from an intersection between the opposite lane cutoff line and the vertical line V toward the left side at an inclination angle of 45°.

Fig. 4B illustrates a right-hand traffic low beam light distribution pattern Lo2. The right-hand traffic low beam light distribution pattern Lo2 is designed so as not to produce a glare to vehicles and pedestrians ahead in the right-hand traffic system. The right-hand traffic low beam light distribution pattern Lo2 and the left-hand traffic low beam light distribution pattern Lo1 are substantially symmetric with each other with respect to the vertical line V.

Fig. 4C illustrates a high beam light distribution pattern Hi1. The high beam light distribution pattern Hi1 irradiates a wide range ahead including a distant region. The high beam light distribution pattern is formed when, for example, a glare to vehicles and pedestrians ahead need not be considered. The high beam light distribution pattern Hi1 is an auxiliary light distribution pattern which covers a pedestrian dazzling region where a pedestrian may be dazzled when driving on a road.

Fig. 4D illustrates a left-side high light distribution pattern Hi2. The left-side high light distribution pattern Hi2 is a modified high beam light distribution pattern that irradiates the high beam region only on the traveling lane side and blocks irradiation on the high beam region on the opposite lane side in the left-hand traffic system. In the left-hand traffic system, the left-side high light distribution pattern Hi2 is preferably used when preceding vehicles or pedestrians do not exist on the traveling lane but oncoming vehicles or pedestrians exist on the opposite lane. The left-side high light distribution pattern Hi2 does not produce a glare to the oncoming vehicles or to the pedestrians on the opposite lane and irradiates the high beam region only on the traveling lane side so as to improve driver visibility. The left-side high light distribution pattern Hi2 is an auxiliary light distribution pattern which covers a pedestrian dazzling region where a pedestrian may be dazzled when driving on a road.

Fig. 4E illustrates a right-side high light distribution pattern Hi3. The right-side high light distribution pattern Hi3 is a modified high beam light distribution pattern that irradiates the high beam region only the opposite lane side and blocks irradiation on the high beam region on the traveling lane side in the left-hand traffic system. In the left-hand traffic system, the right-side high light distribution pattern Hi3 is preferably used when oncoming vehicles or pedestrians do not exist on the opposite lane but preceding vehicles or pedestrians exist on the traveling lane. The right-side high light distribution pattern does not produce a glare to the preceding vehicles or the pedestrians on the traveling lane and irradiates the high beam region only on the opposite lane so as to improve driver visibility. The right-side high light distribution pattern Hi3 is an auxiliary light distribution pattern which covers a pedestrian dazzling region where a pedestrian may be dazzled when driving on a road.

Fig. 4F illustrates a V-beam light distribution pattern Lo3. A traveling lane cutoff line and an opposite lane cutoff line of the V-beam light distribution pattern Lo3 have substantially the same height as the horizontal line H. The V-beam light distribution pattern is a modified low beam light distribution pattern that has intermediate characteristics between a low beam and a high beam. The V-beam light distribution pattern Lo3 may be formed by combining the left-hand traffic low beam light distribution pattern Lo1 formed by the left headlamp 210L and the right-hand traffic low beam light distribution pattern Lo2 formed by the right headlamp 210R. As described above, the left-hand traffic low beam light distribution pattern Lo1L has the oblique cutoff line, and the left-hand traffic low beam light distribution pattern Lo1 and the right-hand traffic low beam light distribution pattern Lo2R are symmetric with each other with respect to the vertical line V. Therefore, the V-beam light distribution pattern Lo3 has a V-shaped light blocked region which is formed by the two oblique cutoff lines below a central part of the horizontal line H. Because the left-hand traffic low beam light distribution pattern Lo1L and the right-hand traffic low beam light distribution pattern Lo2R are combined, the opposite lane cutoff line of the V-beam light distribution pattern Lo3 is higher than the opposite lane cutoff line of the left-hand traffic low beam light distribution pattern Lo1. Likewise, the traveling lane cutoff line of the V-beam light distribution pattern is higher than the traveling lane cutoff line of the right-hand traffic low beam light distribution pattern Lo2. Accordingly, the V-beam light distribution pattern Lo3 provides improved driver visibility than left-hand traffic low beam light distribution pattern Lo1 or the right-hand traffic low beam light distribution pattern Lo2. The V-beam light distribution pattern Lo3 does not produce a glare to relatively distant vehicles or pedestrians ahead, while improving driver visibility by irradiating up to substantially the same height as the horizontal line H.

Fig. 5A illustrates a split light distribution pattern Hi4. The split light distribution pattern Hi4 has a light blocked region UA in a central portion above the horizontal line H, and is a modified high beam light distribution pattern that includes high beam regions on both sides of the light blocked region UA. The split light distribution pattern Hi4 is an auxiliary light distribution pattern that which covers a pedestrian dazzling region where a pedestrian may be dazzled when driving on a road. The split light distribution pattern Hi4 may be formed by combining the left-side high light distribution pattern Hi2L formed by the headlamp 210L and the right-side high light distribution pattern Hi3R formed by the headlamp 210R (hereinafter, reference sign "L" may be added to the end of the reference sign for the light distribution pattern formed by the headlamp 210L, and reference sign "R" may be added to the end of the reference sign for the light distribution pattern formed by the headlamp 210R). When forming the split light distribution pattern, the left-side high light distribution pattern Hi2L and the right-side high light distribution pattern Hi3R are superimposed so that the high beam region of the left-side high light distribution pattern Hi2L and the high beam region of the right-side high light distribution pattern Hi3R are spaced away from each other, whereby the light blocked region UA is formed.

The range of the light blocked region UA may be horizontally changed by swiveling at least one of the lamp units 10 of the headlamps 210R, 210L to horizontally move at least one of the left-side high light distribution pattern Hi2L and the right-side high light distribution pattern Hi3R. Specifically, the range of the light blocked region UA may widened until the traveling lane side of the light blocked region UA reaches a moving limit XL and until the opposite lane side of the light blocked region UA reaches a moving limit XR.

The moving limit XL is a position where an opposite lane side border of the high beam region of the left-side high light distribution pattern Hi2L reaches when the left-side high light distribution pattern Hi2L formed by the headlamp 210L reaches an end of its movable range. The moving limit XR is a position where a traveling lane side border of the high beam region of the right-side high light distribution pattern Hi3R reaches when the right-side high light distribution pattern Hi3R formed by the headlamp 210R reaches an end of its movable range. The "end of the movable range of the light distribution pattern" is a position where the light distribution pattern reaches, for example, when the lamp unit 10 is swiveled to the limit of its swivelable range. That is, the moving limit XL is a position where the opposite lane side border of the high beam region of the left-side high light distribution pattern Hi2L reaches when the lamp unit 10 of the headlamp 210L is swiveled to the limit of its swivelable range. The moving limit XR is a position where the traveling lane side border of the high beam region of the right-side high light distribution pattern Hi3R reaches when the lamp unit 10 of the headlamp 210R is swiveled to the limit of its swivelable range. Information regarding the moving limits XL, XR is stored in a storage units (not shown) of each of the irradiation controllers 228R, 228L as swivel angle data of the lamp units 10. Each of the irradiation controllers 228R, 228L can determine whether the light blocked region UA has reached the moving limit XL, XR by comparing the data and a swivel amount of the lamp unit 10.

When the vehicle controller 302 detects a vehicle 400 ahead based on the information obtained from the camera 306 while the automatic light distribution control is being instructed from the lighting switch 304, the irradiation controllers 228R, 228L receives information from the vehicle controller 302 to determine whether the vehicle 400 is in a range between the moving limits XL, XR. If the vehicle 400 is in the range between the moving limits XL, XR, the irradiation controllers 228R, 228L form the split light distribution pattern Hi4 such that the vehicle 400 is included in the light blocked region UA as shown in Fig. 5A.

Further, based on the information obtained from the vehicle controller 302, the irradiation controllers 228R, 228L modifies the light blocked region UA so as to follow the position of the vehicle 400 by moving at least one of the left-side high light distribution pattern Hi2L and the right-side high light distribution pattern Hi3R. For example, as shown in Fig. 5B, when the vehicle 400 on the opposite lane is approaching, the irradiation controller 228R modifies the light blocked region UA such that the vehicle 400 is included in the light blocked region UA by horizontally moving the right-side high light distribution pattern Hi3R toward the outer side, i.e., to the right.

When the light blocked region UA is modified continuously in accordance with the movement of the forward vehicle 400 and one side of the light blocked region UA reaches the corresponding one of the moving limits XL, XR, the irradiation controller 228R, 228L reduces the illuminance of the right/left-side high light distribution pattern Hi3R, Hi2L that has reached the end of its movable range. Here, the "reduce the illuminance" includes a case where the illuminance of the light distribution pattern that is being formed is decreased to a level that does not produce a glare to the vehicle 400 ahead, and a case where the illuminance of the light distribution pattern is decreased to zero. For example, as shown in Fig. 5C, when the opposite lane side of the light blocked region UA reaches the moving limit XR while the vehicle 400 ahead is approaching, i.e., when the right-side high light distribution pattern Hi3R reaches its moving limit, the irradiation controller 228R switches the light distribution pattern from the right-side high light distribution pattern Hi3R to the left-hand traffic low beam light distribution pattern Lo1R. According to the control described above, a glare to the vehicle 400 ahead can be prevented while improving driver visibility in other regions, in particular, the right and left road shoulder regions.

In this exemplary embodiment, the first lamp unit and the second lamp unit are the lamp units 10 of the headlamps 210R, 210L, and the first partial light distribution pattern and the second partial light distribution pattern are the left-side high light distribution pattern Hi2L and the right-side high light distribution pattern Hi3R. When a vehicle ahead is on the raveling lane, the left-side high light distribution pattern Hi2L is moved to modify the light blocked region UA.

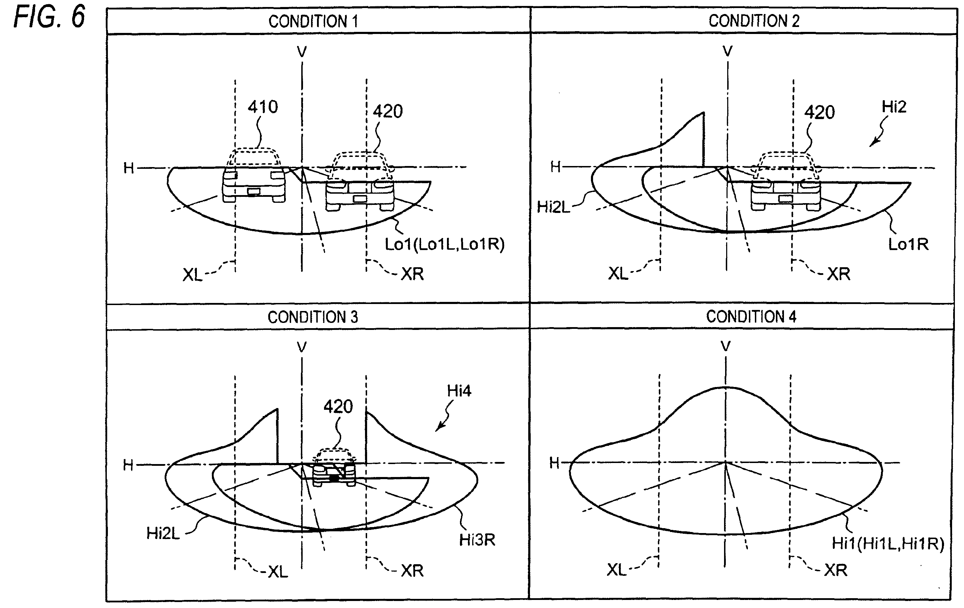

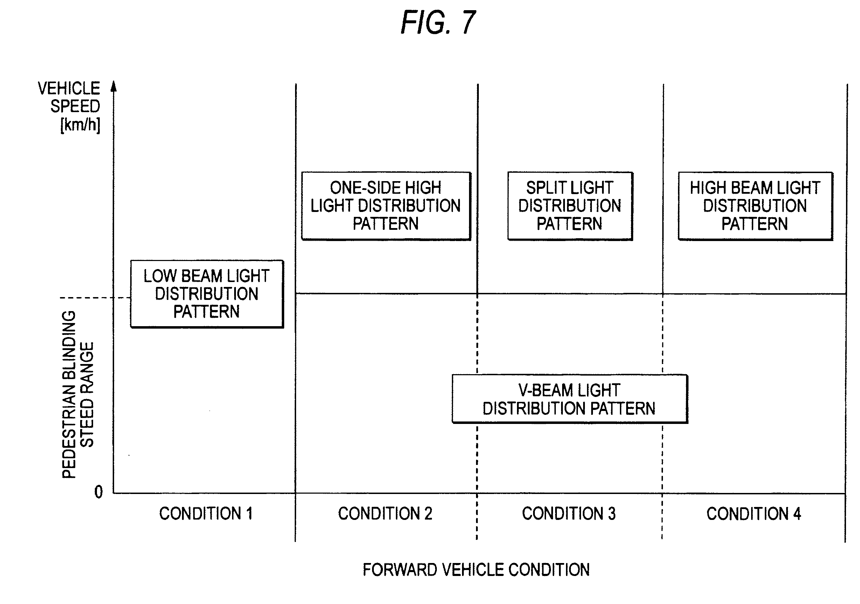

Next, an example of the automatic light distribution control in the vehicle headlamp apparatus 210 will be described. Fig. 6 is a diagram illustrating a relationship between forward vehicle conditions and respective light distribution patterns. Fig. 7 is a view illustrating a relationship between the forward vehicle conditions, a speed of the vehicle on which the headlamp apparatus 210 is mounted, and the respective light distribution patterns.

In this exemplary embodiment, the irradiation controllers 228R, 228L controls the lamp units 10 to form an auxiliary light distribution depending on the forward vehicle conditions. Further, when the speed of the vehicle on which the headlamp apparatus 210 is mounted is in a pedestrian blinding speed range, the irradiation controllers 228R, 228L reduce the illuminance of the auxiliary light distribution pattern. The auxiliary light distribution pattern is a light distribution pattern that covers a pedestrian dazzling region where a pedestrian may be dazzled when driving on a road. The pedestrian dazzling region is a region where, when irradiated, a glare may be produced to a pedestrian when driving on a road. For example, the pedestrian dazzling region is a region where the pedestrian's head is predicted to exist. The pedestrian dazzling region is a region where, for example, a region above the horizontal line H and a road shoulder region overlap with each other. Examples of the auxiliary light distribution pattern include the high beam light distribution pattern Hi1, the left-side high light distribution pattern Hi2, the right-side high light distribution pattern Hi3, and the split light distribution pattern Hi4. That is, the auxiliary light distribution pattern covers a region above the cutoff line of the low beam light distribution pattern Lo1, Lo2.

First, the vehicle headlamp apparatus 210 forms a light distribution pattern in accordance with a vehicle ahead of the vehicle headlamp apparatus 210. In this exemplary embodiment, the vehicle headlamp apparatus 210 forms a light distribution pattern depending on the conditions regarding the existence of vehicles ahead of the headlamp apparatus 210. As shown in Fig. 6, a forward vehicle condition 1 is a condition in which at least a part of a preceding vehicle 410 traveling on the same traveling lane overlaps with a region outside the moving limit XL (i.e., the region on a left shoulder side from the moving limit XL) and at least a part of an oncoming vehicle 420 traveling on the opposite lane overlap with a region outside the moving limit XR (i.e., the region on a right shoulder side from the moving limit XR). Under this condition, the left-hand traffic low beam light distribution pattern Lo1 is formed by superimposing the left-hand traffic low beam light distribution pattern Lo1L and the left-hand traffic low beam light distribution pattern Lo1R so that a glare is not produced to the preceding vehicle 410 or to the oncoming vehicle 420. In this forward vehicle condition 1, there is not so much need to be in visual contact with a distant region because an inter-vehicle distance to the preceding vehicle 410 is relatively short. Accordingly, the left-hand traffic low beam light distribution pattern Lo1 alone can generally satisfy driver's need for visibility.

A forward vehicle condition 2 is a condition in which a vehicle ahead is traveling on either the traveling lane or the opposite lane, and at least a part of the vehicle ahead overlaps with the region outside one of the moving limits XL, XR. Under this condition, the light distribution pattern is formed so as to improve visibility in a region where the vehicle ahead does not exist while preventing a glare to the vehicle ahead. For example, when the oncoming vehicle 420 is in the forward vehicle condition 2 as shown in Fig. 6, the left-side high light distribution pattern Hi2 is formed as a whole by superimposing the left-side high light distribution pattern Hi2L and the left-hand traffic low beam light distribution pattern Lo1R. When a preceding vehicle is in the forward vehicle condition 2, the right-side high light distribution pattern Hi3 is formed as a whole by superimposing the left-hand traffic low beam light distribution pattern Lo1L and the right-side high light distribution pattern Hi3R. The left-side high light distribution pattern Hi2 may be formed by superimposing the left-side high light distribution pattern Hi2L and the left-side high light distribution pattern Hi2R. The right-side high light distribution pattern Hi3 may be formed by superimposing the right-side high light distribution pattern Hi3L and the right-side high light distribution pattern Hi3R.

A forward vehicle condition 3 is a condition in which a vehicle ahead is traveling on at least one of the traveling lane and the opposite lane, and the vehicle ahead is within the range between the moving limits XL, XR. Under this condition, in order to improve visibility in a region where the vehicle ahead does not exist while preventing a glare to the vehicle ahead, the split light distribution pattern Hi4 is formed by superimposing the left-side high light distribution pattern Hi2L and the right-side high light distribution pattern Hi3R. The split light distribution pattern Hi4 can further improve driver visibility since it provides a larger irradiated region above the horizontal line H than the left-side high light distribution pattern Hi2 or the right-side high light distribution pattern Hi3. Further, in the forward vehicle condition 3, an inter-vehicle distance to the vehicle ahead is longer than in the case of forward vehicle condition 2. Thus, in the forward vehicle condition 3, likelihood of pedestrians running into the road from the shoulder regions is generally higher than in the case of forward vehicle condition 2. According to the split light distribution pattern Hi4, however, the right and left road shoulder regions are irradiated, so that it is easier to be in visual contact with pedestrians. Therefore, it is possible to recognize the pedestrians who might run into the road in an earlier stage.

A forward vehicle condition 4 is a condition in which a vehicle ahead does not exist or a vehicle ahead is sufficiently distant such that a glare is not produced to that vehicle even with the high beam light distribution pattern Hi1. Under this condition, driver visibility can be improved without considering a glare to the vehicle ahead. Therefore, the high beam light distribution pattern Hi1 is formed by superimposing the high beam light distribution pattern Hi1L and the high beam light distribution pattern Hi1R.

In an urban area, since there are relatively many pedestrians, it is necessary to consider not to produce a glare to the pedestrians. Further, because the vehicle speed is generally low in the urban area, and there is not so much need to improve distant visibility. In this exemplary embodiment, a range of vehicle speed that is equal to or lower than a predetermined speed is defined as a pedestrian blinding speed range and, if a vehicle speed is within the pedestrian blinding speed range, the irradiation controllers 228R, 228L determine that the vehicle 300 is traveling in an urban area and reduce the illuminance of the auxiliary light distribution pattern such as the high beam light distribution pattern Hi1. The pedestrian blinding speed range is a range in which a vehicle can be assumed to be traveling in an urban area, and may optionally be set based on experiments or simulations. The pedestrian blinding speed range is, for example, a range of 50 km/h or less.

In this exemplary embodiment, when the vehicle speed is within the pedestrian blinding speed range while it is in one of the forward vehicle conditions 2, 3, 4, as shown in Fig. 7, the irradiation controllers 228R, 228L form the V-beam light distribution pattern Lo3 as a light distribution pattern that does not include a pedestrian dazzling region. The left-hand traffic low beam light distribution pattern Lo1 formed under the forward vehicle condition 1 is designed so as not to produce a glare to pedestrians. Accordingly, in the case of the forward vehicle condition 1, the left-hand traffic low beam light distribution pattern Lo1 is maintained even when a vehicle speed is within the pedestrian blinding speed range. As described above, when the vehicle speed is within the pedestrian blinding speed range, the irradiation controller 228 determine that the vehicle 300 in traveling in an urban area and reduces the illuminance of the auxiliary light distribution pattern that covers the pedestrian dazzling region. Accordingly, it is possible to prevent a glare from being produced to a pedestrian with a simple configuration.

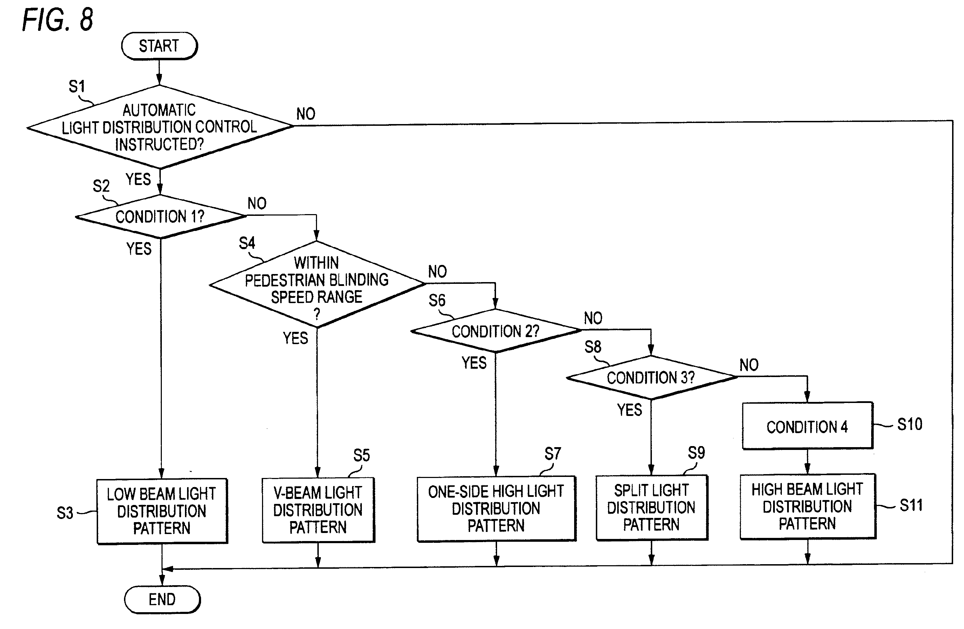

Fig. 8 is a flowchart of the automatic light distribution control that is carried out in accordance with forward vehicle conditions and a speed of the vehicle 300. The irradiation controllers 228R, 228L repeat this flow at given timings.

First, based on the information obtained from the vehicle controller 302, the irradiation controllers 228R, 228L determine whether the automatic light distribution control is being instructed (S1). If the automatic light distribution control is not being instructed (S1; No), this routine is ended. If the automatic light distribution control is being instructed (S1; Yes), the irradiation controllers 228R, 228L determine whether it is in the forward vehicle condition 1 based on the information obtained from the vehicle controller 302 (S2). If it is in the forward vehicle condition 1 (S2; Yes), the irradiation controllers 228R, 228L form the left-hand traffic low beam light distribution pattern Lo1 (S3).

If it is not in the forward vehicle condition 1 (S2; No), the irradiation controllers 228R, 228L determine whether the peed of the vehicle 300 is in the pedestrian blinding speed range based on of the information obtained from the vehicle controller 302 (S4). If the vehicle speed is within the pedestrian blinding speed range (S4; Yes), the irradiation controllers 228R, 228L form the V-beam light distribution pattern Lo3 by superimposing the left-hand traffic low beam light distribution pattern Lo1L and the right-hand traffic low beam light distribution pattern Lo2R (S5). If the vehicle speed is outside the pedestrian blinding speed range (S4; No), the irradiation controllers 228R, 228L determine whether it is in the forward vehicle condition 2 (S6). If it is in the forward vehicle condition 2 (S6; Yes), the irradiation controllers 228R, 228L form the left-side high light distribution pattern Hi2 or the right-side high light distribution pattern Hi3 depending on the position of the forward vehicle (S7).

If it is not in the forward vehicle condition 2 (S6; No), the irradiation controllers 228R, 228L determine whether the it is in the forward vehicle condition 3 (S8). If it is in the forward vehicle condition 3 (S8; Yes), the irradiation controllers 228R, 228L form the split light distribution pattern Hi4 (S9). If it is not in the forward vehicle condition 3 (S8; No), the irradiation controllers 228R, 228L determine that it is in the forward vehicle condition 4 (S10) and form the high beam light distribution pattern Hi1 (S11).

In this exemplary embodiment, the V-beam light distribution pattern Lo3 is formed when the vehicle speed is within the pedestrian blinding speed range. However, in another exemplary embodiment, the irradiation controller 288 may form a different light distribution pattern that does not irradiate the pedestrian dazzling region. Such a light distribution pattern may be a horizontally-cut light distribution pattern that has a cutoff line extending substantially on the horizontal line H. In another example, the dynamic cutoff line may be formed by shifting up, in accordance with the position of the vehicle ahead, the cutoff line of the left-hand traffic low beam light distribution pattern Lo1 using the leveling actuator 226. For example, when an inter-vehicle distance is increased while the vehicle speed is within the pedestrian blinding speed range, and the forward vehicle condition is changed from condition 1 to condition 2, the likelihood of producing a glare to the vehicle ahead is small even if the cutoff line is moved upward, while it is still necessary to consider the pedestrians. Accordingly, the V-beam light distribution pattern Lo3 may be formed under the forward vehicle condition 2. When the inter-vehicle distance is further increased, the likelihood of producing a glare to the vehicle ahead is further decreased. Accordingly, the V-beam light distribution pattern Lo3 may be changed to a dynamic cutoff line taking into account a glare to the pedestrians, thereby further improving driver visibility.

The operations and advantages according to the configuration described above will be summarized below. The vehicle headlamp apparatus 210 according to the exemplary embodiment controls the formation of the auxiliary light distribution pattern, based on the existence of a vehicle ahead of the vehicle headlamp apparatus 210 and the speed of the vehicle 300. The auxiliary light distribution pattern covers a pedestrian dazzling region where a pedestrian may be dazzled when driving on a road. Specifically, if the speed of the vehicle 300 is within the pedestrian blinding speed range, the illuminance of the auxiliary light distribution pattern is reduced. Because the auxiliary light distribution pattern is formed in accordance with the existence of the vehicle ahead as described above, it is possible to improve driver visibility while preventing a glare to the vehicle ahead. Further, when the vehicle speed is equal to or lower than a predetermined speed, it is assumed that the vehicle 300 is traveling in an urban area where many pedestrians exist, and the illuminance of the auxiliary light distribution pattern is reduced. Accordingly, it is possible to prevent a glare from being produced to the pedestrians with simpler configuration than in a case in which sensors for detecting the pedestrians are provided.

Further, the auxiliary light distribution pattern covers a dazzling region where a region above the horizontal line H and road shoulder regions overlap with each other. In this case, it is possible to more reliably prevent a glare from being produced to the pedestrians on the road shoulder regions. Moreover, the lamp unit 10 is operable to form, as the auxiliary light distribution pattern, a plurality of light distribution patterns having different light blocked regions. More specifically, the auxiliary light distribution pattern may be the left-side high light distribution pattern Hi2, the right-side high light distribution pattern Hi3, the split light distribution pattern Hi4, or the like. The irradiation controllers 228R, 228L switches the plurality of light distribution patterns in accordance with the position of a vehicle ahead such that the vehicle ahead is included in the light blocked region. Accordingly, it is possible to further improve driver visibility while preventing a glare from being produced to the vehicle ahead.

Further, the lamp units 10 of the headlamps 210R, 210L form the left-side high light distribution pattern Hi2 and the right-side high light distribution pattern Hi3 as the first and second partial light distribution patterns, each covering a part of a region above the horizontal line H, such that the respective light distribution patterns are horizontally movable. The irradiation controllers 228R, 228L controls the respective lamp units 10 to form the split light distribution pattern Hi4 by combining the left-side high light distribution pattern Hi2 and the right-side high light distribution pattern Hi3, such that the split light distribution pattern Hi4 has the light blocked region UA that corresponds to the position of the vehicle ahead. The irradiation controllers modify the light blocked region UA so as to correspond to the change of the position of a forward vehicle by moving at least one of the left-side high light distribution pattern Hi2 and the right-side high light distribution pattern Hi3. When the moved light distribution pattern reaches the corresponding one of the moving limits XL, XR, the illuminance thereof is reduced. Accordingly, it is possible to further improve driver visibility while preventing a glare from being produced to the vehicle ahead.

### Second Exemplary Embodiment

A vehicle headlamp apparatus according to a second exemplary embodiment is different from the vehicle headlamp apparatus 210 according to the first exemplary embodiment in that the formation of the light distribution pattern is controlled in accordance with the acceleration of the vehicle on which the headlamp apparatus is mounted in addition to the existence of a vehicle ahead and the vehicle speed. The basic configuration of the vehicle headlamp apparatus, the light distribution patterns that can be formed, and the like are the same as those of the first exemplary embodiment. Accordingly, the same features as those of the first exemplary embodiment are denoted by the same reference signs, and the description thereof will be omitted.

When the acceleration of the vehicle 300 is rapidly changed due to sudden acceleration or sudden deceleration, and the forward vehicle condition or the vehicle speed is changed frequently in a short time accordingly, the light distribution pattern is switched frequently. This may cause a visual trouble or discomfort to the driver, or may fail to form an optimum light distribution pattern that corresponds to the position of the vehicle ahead and to the vehicle speed due to the delay of the switching of the light distribution pattern. In particular, when the auxiliary light distribution pattern, which irradiates a region above the horizontal line H, is switched frequently, the likelihood of causing discomfort to the driver and providing a glare to a vehicle and pedestrian ahead is high.

Accordingly, when the acceleration of the vehicle 300 exceeds a threshold, the irradiation controllers 228R, 228L of the vehicle headlamp apparatus 210 according to this exemplary embodiment limit the formation of the auxiliary light distribution pattern to address the problems described above, such as causing trouble or discomfort to the driver or producing a glare to a vehicle ahead. More specifically, when the acceleration of the vehicle exceeds the threshold, the irradiation controllers 228R, 228L reduce the illuminance of the auxiliary light distribution pattern. Accordingly, it is possible to more reliably avoid risk of causing trouble or discomfort to the driver or producing a glare to a vehicle or pedestrian ahead. In a case in which the switching of the light distribution pattern has a hysteresis characteristic, the timing for switching the auxiliary light distribution pattern from the non-formed state to the formed state may be delayed by changing the width of the hysteresis. In this case, the timing for switching the auxiliary light distribution pattern from the formed state to the non-formed state becomes quicker. Alternatively, the switching of the auxiliary light distribution pattern from the non-formed state to the formed state may be restricted, and only the switching of the auxiliary light distribution pattern from the formed state to the non-formed state may be allowed. In these cases, it is possible to ensure driver visibility to some extent while suppressing trouble or discomfort to the driver and a glare to a vehicle ahead.

The acceleration of the vehicle 300 may be detected by an acceleration sensor (not shown) mounted on the vehicle 300. Alternatively, based on the vehicle speed obtained from the vehicle speed sensor 312, the acceleration may be obtained by calculating a variation of the vehicle speed per unit time. Alternatively, in a case in which the vehicle 300 includes an anti-lock brake system (ABS), it can be judged that there is a sudden deceleration of the vehicle when the ABS is operated. Accordingly, it may be determined that the acceleration of the vehicle exceeds a threshold when an ABS operation signal is detected. Furthermore, when the flicker of a hazard lamp caused by an emergency stop signal (ESS) is detected, it can also be judged that there is a sudden deceleration of the vehicle. Accordingly, it may be determined that the acceleration of the vehicle exceeds a threshold when the ESS is detected. The flicker of the hazard lamp caused by the ESS has a cycle shorter (a frequency higher) than that of the general flicker of the hazard lamp. Therefore, it is possible to detect the flicker of the hazard lamp, which is caused by the ESS, by the camera 306 or the like so as to distinguish the flicker of the hazard lamp, which is caused by the ESS, from the general flicker of the hazard lamp. The "threshold" is an acceleration which results in such a switching speed of a light distribution pattern that a driver is apt to feel trouble and the like or that a glare is apt to be produced to a vehicle ahead, and may optionally be set on the basis of experiments or simulations.

The above-described control of the formation of the light distribution pattern is performed in accordance with the following flow. That is, in the flowchart shown in Fig. 8, a step of determining whether the acceleration exceeds a threshold is inserted after the step S1. If it is determined that the acceleration does not exceed a threshold, the control flow proceeds to step S2. If it is determined that the acceleration exceeds a threshold, the above-mentioned control is performed.

According to the configuration and control of the second exemplary embodiment described above, it is possible to improve driver visibility while preventing a glare from being produced to a vehicle ahead with a simple structure, and to avoid the frequent switching of a light distribution pattern. Therefore, it is possible to prevent a driver's discomfort or a glare to a vehicle ahead that may be caused by the switching of the light distribution pattern.

The present invention is not limited to the exemplary embodiments described above. The exemplary embodiments may be combined, or modifications such as various kinds of design changes may be made on the basis of the knowledge of those skilled in the art. Accordingly, the combination of the exemplary embodiments and the modifications of the exemplary embodiments are also included within the scope of the present invention. The combination of the exemplary embodiments described above and the combination of one or more of the exemplary embodiments described above and the following modifications have the advantages of the exemplary embodiments and modifications to be combined.

### First Modification

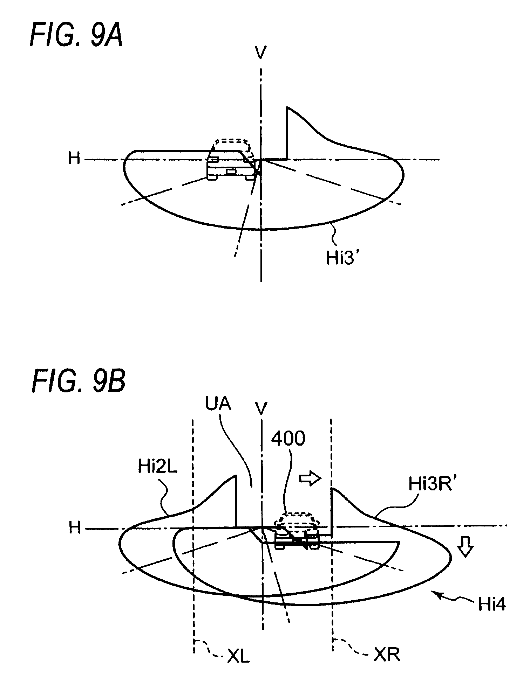

The vehicle headlamp apparatuses 210 according to the first and second exemplary embodiments may have the following modifications. Figs. 9A and 9B are diagrams illustrating light distribution patterns according to a first modification.

A traveling lane cutoff line of each of the light distribution patterns may be arranged above the horizontal line H to improve driver visibility. For example, the right-side high light distribution pattern Hi3 may be modified as a modified right-side high light distribution pattern Hi3' having a traveling lane cutoff line that is higher than the horizontal line H as shown in Fig. 9A. However, if a split light distribution pattern Hi4 is formed using the modified right-side high light distribution pattern Hi3', the traveling lane cutoff line of the modified right-side high light distribution pattern Hi3' may be moved toward the opposite lane by the swiveling of the lamp unit 10 and may produce a glare to an oncoming vehicle. Thus, when the traveling lane cutoff line is moved toward the opposite lane as shown in Fig. 9B by swiveling the modified right-side high light distribution pattern Hi3', the modified right-side high light distribution pattern Hi3' may be moved down until the traveling lane cutoff line reaches substantially the same height as the horizontal line H by controlling the leveling actuator 226 to move the lamp unit 10 to be in a forwardly inclined orientation, thereby preventing a glare from being produced to a vehicle ahead.

### Second Modification

In the first and second exemplary embodiments, the forward vehicle conditions are classified into conditions 1 to 4, and a light distribution pattern is switched in accordance with the respective conditions. Here, the conditions 1 to 4 are switched in accordance with an inter-vehicle distance to a forward ahead. More specifically, the inter-vehicle distance is increased in the order of condition 1, condition 2, condition 3, and condition 4. Thus, the irradiation controllers 228R, 228L may control the formation of the light distribution pattern in accordance with the inter-vehicle distance and the vehicle speed.

### Other Modifications

The high beam region of each of the left-side high light distribution pattern Hi2 and the right-side high light distribution pattern Hi3 may be designed to cover a hot zone, which is a high luminous intensity region where the vertical line V and the horizontal line H intersect with each other. That is, the high beam region of the left-side high light distribution pattern Hi2 may reach the opposite lane side over the vertical line V, and the high beam region of the right-side high light distribution pattern Hi3 may reach the traveling lane side over the vertical line V. In this case, it is possible to form a hot zone that has a higher luminous intensity.

Further, in the exemplary embodiments described above, the irradiation controllers 228R, 228L determine the forward vehicle condition as well as whether the vehicle speed is within a pedestrian blinding speed range. However, the vehicle controller 302 may determine the forward vehicle condition as well as whether the vehicle speed is within a pedestrian blinding speed range. In this case, each of the irradiation controllers 228R, 228L controls the driving of the swivel actuator 222 and the motor 238 based on instructions from the vehicle controller 302.

## Claims

1. A vehicle headlamp apparatus (210) comprising:
a lamp unit (10) operable to form an auxiliary light distribution pattern (Hi1, Hi2, Hi3, Hi4) which covers a pedestrian dazzling region where a pedestrian may be dazzled when driving on a road; and
a controller (228) for controlling a light irradiation of the lamp unit (10) in accordance with a vehicle (400, 410, 420) existing ahead of a vehicle (300), on which the vehicle headlamp apparatus (210) is mounted,
wherein the controller (228) is configured to reduce an illuminance of the auxiliary light distribution pattern (Hi1, Hi2, Hi3, Hi4) when a speed of the vehicle (300), on which the vehicle headlamp apparatus (210) is mounted, is in a range in which the vehicle can be assumed to be travelling in an urban area,
**characterized in that**
the lamp unit (10) comprises a first lamp unit (10) operable to form a first partial light distribution pattern (Hi2L) and to horizontally move the first partial light distribution pattern (Hi2L), and a second lamp unit (10) operable to form a second partial light distribution pattern (Hi3R) and to horizontally move the second partial light distribution pattern (Hi3R), the first partial light distribution pattern (Hi2L) covering a part of the region above the horizontal line (H), and the second partial light distribution pattern (Hi3R) covering another part of the region above the horizontal line (H), and
the controller (228) is configured to control the first lamp unit (10) and the second lamp unit (10) to form the auxiliary light distribution pattern (Hi4) by combining the first partial light distribution pattern (Hi2L) and the second partial light distribution pattern (Hi3R) such that the auxiliary light distribution pattern (Hi4) has a light blocked region (UA) that corresponds to a position of the vehicle (400, 410, 420) ahead, to move at least one of the first partial light distribution pattern (Hi2L) and the second partial light distribution pattern (Hi3R) such that the light blocked region (UA) is changed so as to follow the position of the vehicle (400, 410, 420) ahead, and the controller is configured to switch only the light distribution pattern from the moved first partial light distribution pattern (Hi2L) to a corresponding low beam light distribution pattern when the moved first partial light distribution pattern (Hi2L) reaches an end (XL) of its movable horizontal range; and
to switch only the light distribution pattern from the moved second partial light distribution pattern (Hi3R) to a corresponding low beam light distribution pattern (Lo1R) when the moved second partial light distribution pattern (Hi3R) reaches an end (XR) of its movable horizontal range.

2. The vehicle headlamp apparatus (210) according to claim 1, wherein the pedestrian dazzling region is a region where a region above the horizontal line (H) and a road shoulder region overlap with each other.

3. The vehicle headlamp apparatus (210) according to any one of the preceding claims, wherein the controller (228) is configured to limit a formation of the auxiliary light distribution pattern (Hi1, Hi2, Hi3, Hi4) when an acceleration of the vehicle (300), on which the vehicle headlamp apparatus (210) is mounted, exceeds a threshold.

4. The vehicle headlamp apparatus (210) according to claim 3, wherein the controller (228) is configured to reduce the illuminance of the auxiliary light distribution pattern (Hi1, Hi2, Hi3, Hi4) when the acceleration of the vehicle (300), on which the vehicle headlamp apparatus (210) is mounted, exceeds the threshold.

## Patentansprüche

1. Fahrzeugscheinwerfer-Vorrichtung (210), die umfasst:
eine Leuchteneinheit (10), die in Funktion ein Zusatz-Lichtverteilungsmuster (Hi1, Hi2, Hi3, Hi4) ausbilden kann, das beim Fahren auf einer Straße einen Fußgänger-Blendbereich abdeckt, in dem ein Fußgänger geblendet werden kann; und
eine Steuereinrichtung (228), mit der eine Lichtstrahlung der Leuchteneinheit (10) entsprechend einem Fahrzeug (400, 410, 420) gesteuert wird, das einem Fahrzeug (300) vorausfährt, an dem die Fahrzeugscheinwerfer-Vorrichtung (210) installiert ist,
wobei die Steuereinrichtung (228) so eingerichtet ist, dass sie eine Beleuchtungsstärke des Zusatz-Lichtverteilungsmusters (Hi1, Hi2, Hi3, Hi4) reduziert, wenn eine Geschwindigkeit des Fahrzeugs (300), an dem die Fahrzeugscheinwerfer-Vorrichtung (210) installiert ist, in einem Bereich liegt, in dem angenommen werden kann, dass das Fahrzeug in einem städtischen Bereich fährt,
**dadurch gekennzeichnet, dass**
die Leuchteneinheit (10) eine erste Leuchteneinheit (10), die in Funktion ein erstes Teil-Lichtverteilungsmuster (Hi2L) ausbilden kann und das erste Teil-Lichtverteilungsmuster (Hi2L) horizontal verschieben kann, sowie eine zweite Leuchteneinheit (10) umfasst, die in Funktion ein zweites Teil-Lichtverteilungsmuster (Hi3R) ausbilden kann und das zweite Teil-Lichtverteilungsmuster (Hi3R) horizontal verschieben kann, wobei das erste Teil-Lichtverteilungsmuster (Hi2L) einen Teil des Bereiches oberhalb der horizontalen Linie (H) abdeckt und das zweite Teil-Lichtverteilungsmuster (Hi3R) einen anderen Teil des Bereiches oberhalb der horizontalen Linie (h) abdeckt, und
die Steuereinrichtung (228) so eingerichtet ist, dass sie die erste Leuchteneinheit (10) und die zweite Leuchteneinheit (10) so steuert, dass das Zusatz-Lichtverteilungsmuster (Hi4) ausgebildet wird, indem das erste Teil-Lichtverteilungsmuster (Hi2L) und das zweite Teil-Lichtverteilungsmuster (Hi3R) so kombiniert werden, dass das Zusatz-Lichtverteilungsmuster einen für Licht blockierten Bereich (UA) hat, der einer Position des vorausfahrenden Fahrzeugs (400, 410, 420) entspricht, sie das erste Teil-Lichtverteilungsmuster (Hi2L) oder/und das zweite Teil-Lichtverteilungsmuster (Hi3R) so verschiebt, dass der für Licht blockierte Bereich (UA) so verändert wird, dass er der Position des vorausfahrenden Fahrzeugs (400, 410, 420) entspricht, und die Steuereinrichtung so eingerichtet ist, dass sie nur das Lichtverteilungsmuster von dem verschobenen ersten Teil-Lichtverteilungsmuster (Hi2L) auf ein entsprechendes Abblend-Lichtverteilungsmuster umschaltet, wenn das verschobene erste Teil-Lichtverteilungsmuster (Hi2L) ein Ende (XL) seines horizontalen Bewegungsbereiches erreicht;
und sie nur das Lichtverteilungsmuster von dem verschobenen zweiten Teil-Lichtverteilungsmuster (Hi3R) auf ein entsprechendes Abblend-Lichtverteilungsmuster (Lo1R) umschaltet, wenn das verschobene zweite Teil-Lichtverteilungsmuster (Hi3R) ein Ende (XR) seines horizontalen Bewegungsbereiches erreicht.

2. Fahrzeugscheinwerfer-Vorrichtung (210) nach Anspruch 1, wobei der Fußgänger-Blendbereich ein Bereich ist, in dem ein Bereich oberhalb der horizontalen Linie (H) und ein Fahrbahnrand-Bereich einander überlappen.

3. Fahrzeugscheinwerfer-Vorrichtung (210) nach einem der vorangehenden Ansprüche, wobei die Steuereinrichtung (228) so eingerichtet ist, dass sie eine Ausbildung des Zusatz-Lichtverteilungsmusters (Hi1, Hi2, Hi3, Hi4) einschränkt, wenn eine Beschleunigung des Fahrzeugs (300), an dem die Fahrzeugscheinwerfer-Vorrichtung (210) installiert ist, einen Schwellenwert überschreitet.

4. Fahrzeugscheinwerfer-Vorrichtung (210) nach Anspruch 3, wobei die Steuereinrichtung (228) so eingerichtet ist, dass sie die Beleuchtungsstärke des Zusatz-Lichtverteilungsmusters (Hi1, Hi2, Hi3, Hi4) reduziert, wenn die Beschleunigung des Fahrzeugs (300), an dem die Fahrzeugscheinwerfer-Vorrichtung (210) installiert ist, den Schwellenwert überschreitet.

## Revendications

1. Appareil de phare de véhicule (210) comprenant :
une unité de lampe (10) utilisable pour former un motif de distribution de lumière auxiliaire (Hi1, Hi2, Hi3, Hi4) qui couvre une région d'éblouissement des piétons où un piéton peut être éblouit lors de la conduite sur une route ; et
un contrôleur (228) pour contrôler l'irradiation de lumière de l'unité de lampe (10) par rapport à un véhicule (400, 410, 420) qui se trouve devant un véhicule (300) sur lequel est monté l'appareil de phare de véhicule (210),
dans lequel le contrôleur (228) est configuré pour réduire l'éclairement du motif de distribution de lumière auxiliaire (Hi1, Hi2, Hi3, Hi4) quand une vitesse du véhicule (300) sur lequel est monté l'appareil de phare de véhicule (210) est comprise dans une plage dans laquelle on peut assumer que le véhicule se déplace dans une zone urbaine,
**caractérisé en ce que**
l'unité de lampe (10) comprend une première unité de lampe (10) utilisable pour former un premier motif partiel de distribution de lumière (Hi2L) et pour déplacer le premier motif partiel de distribution de lumière (Hi2L) horizontalement, et une deuxième unité de lampe (10) utilisable pour former un deuxième motif partiel de distribution de lumière (Hi3R) et pour déplacer le deuxième motif partiel de distribution de lumière (Hi3R) horizontalement, le premier motif partiel de distribution de lumière (Hi2L) couvrant une partie de la région au-dessus de la ligne horizontale (H), et le deuxième motif partiel de distribution de lumière (Hi3R) couvrant une autre partie de la région au-dessus de la ligne horizontale (H), et
le contrôleur (228) est configuré pour contrôler la première unité de lampe (10) et la deuxième unité de lampe (10) pour former le motif de distribution de lumière auxiliaire (Hi4) en combinant le premier motif partiel de distribution de lumière (Hi2L) et le deuxième motif partiel de distribution de lumière (Hi3R) de telle sorte que le motif de distribution de lumière auxiliaire (Hi4) présente une région de lumière bloquée (UA) qui correspond à une position du véhicule (400, 410, 420) devant, pour déplacer au moins un motif parmi le premier motif partiel de distribution de lumière (Hi2L) et le deuxième motif partiel de distribution de lumière (Hi3R) de telle sorte que la région de lumière bloquée (UA) est changée de manière à suivre la position du véhicule (400, 410, 420) devant, et le contrôleur est configuré pour commuter uniquement le motif de distribution de lumière du premier motif partiel de distribution de lumière déplacé (Hi2L) à un motif de distribution de lumière de feux de croisement correspondant quand le premier motif partiel de distribution de lumière déplacé (Hi2L) atteint une extrémité (XL) de sa plage horizontale mobile ; et pour commuter uniquement le motif de distribution de lumière du deuxième motif partiel de distribution de lumière déplacé (Hi3R) à un motif de distribution de lumière de feux de croisement (Lo1R) correspondant quand le deuxième motif partiel de distribution de lumière déplacé (Hi3R) atteint une extrémité (XR) de sa plage horizontale mobile.

2. Appareil de phare de véhicule (210) selon la revendication 1, dans lequel la région d'éblouissement des piétons est une région dans laquelle une région au-dessus de la ligne horizontale (H) et une région d'accotement de la route se chevauchent mutuellement.

3. Appareil de phare de véhicule (210) selon l'une quelconque des revendications précédentes, dans lequel le contrôleur (228) est configuré pour limiter la formation du motif de distribution de lumière auxiliaire (Hi1, Hi2, Hi3, Hi4) quand une accélération du véhicule (300), sur lequel est monté l'appareil de phare de véhicule (210), dépasse un seuil.

4. Appareil de phare de véhicule (210) selon la revendication 3, dans lequel le contrôleur (228) est configuré pour réduire l'éclairement du motif de distribution de lumière auxiliaire (Hi1, Hi2, Hi3, Hi4) quand l'accélération du véhicule (300), sur lequel est monté l'appareil de phare de véhicule (210), dépasse le seuil.
